# EUROPEAN PATENT APPLICATION

(11) **EP 3 447 502 A1**
(43) Date of publication of application: **27.02.2019**
(21) Application number: 18189047.6
(22) Date of filing: 14.08.2018
(51) Int. Cl.: G01P 13/02, G01P 5/165

(54) **AIR DATA SYSTEM ARCHITECTURES USING INTEGRATED PRESSURE PROBES**

(30) Priority: 24.08.2017 US 201715685711
(71) Applicant: Rosemount Aerospace Inc., Burnsville, MN 55306-4898 (US)
(72) Inventor: LIFFRIG, Ronald Fritz, Prior Lake, MN Minnesota 55372-3403 (US); NASLUND, Brian Brent, Chanhassen, MN Minnesota 55317 (US); BENNING, Kevin, Lakeville, MN Minnesota 55044 (US)
(74) Representative: Dehns

(57) **Abstract**

An aircraft air data system (10) includes a first air data probe disposed on a first side of the aircraft (12), a second air data probe disposed on a second side of the aircraft (12), a first plurality of static pressure sensing ports (42A, 42B, 44A) disposed on the first side of the aircraft (12), and a second plurality of static pressure ports (42C, 42D, 44B) disposed on the second side of the aircraft (12). Each of the first air data probe and the second air data probe include a barrel portion configured to extend into an oncoming airflow, a total pressure sensing port, and an integrated total pressure sensor. Each of the first plurality of static pressure sensing ports is connected to one of a first plurality of integrated static pressure sensors. Each of the second plurality of static pressure sensing ports is connected to one of a second plurality of integrated static pressure sensors.

## Description

### BACKGROUND

The present disclosure relates generally to air data systems, and more particularly to air data systems utilizing total pressure and static pressure measurements for generating aircraft air data parameters.

Modern aircraft often incorporate air data systems that calculate air data outputs based on measured parameters collected from various sensors positioned about the aircraft. For instance, many air data systems utilize air data probes that measure pneumatic pressure of oncoming airflow about the aircraft exterior to generate aircraft air data outputs, such as angle of attack (i.e., an angle between the oncoming airflow or relative wind and a reference line of the aircraft, such as a chord of a wing of the aircraft), calibrated airspeed, Mach number, altitude, or other air data parameters. Compensation of various local (to the probe) parameters or signals, such as angle of attack and static pressure, is advantageous for accurate determination of aircraft air data parameters, such as during sideslip of the aircraft (i.e., a nonzero angle between the direction of travel of the aircraft and the aircraft centerline extending through the nose of the aircraft) or otherwise.

Increased accuracy achieved through such compensation is particularly relevant when the aircraft operates in Reduced Vertical Separation Minimum (RVSM) space areas of air traffic control systems. To this end, many air data systems utilize multiple pneumatic air data probes and static pressure ports positioned at opposite sides of the aircraft to provide pressure information usable for characterization of the sideslip condition and corresponding compensation of the pressure measurements and derived air data parameters.

As aircraft systems such as flight control systems and stall protection systems become more highly integrated, complex, and automated, the integrity of air data information used by these aircraft systems becomes increasingly important. As such, these highly complex systems typically utilize redundant inputs of air data information that are measured by independent sources. To achieve such redundancy, independence, and corresponding system reliability, traditional aircraft air data systems often utilize multiple pitot pressure probes and static pressure ports located separately and spaced about the aircraft exterior. Pressures from the pitot probes and static pressure ports are typically communicated to remote pressure transducers via pneumatic tubing or other pneumatic connections.

Such pneumatic connections between the air data probes and the corresponding pressure transducers, however, can be a source of pneumatic leaks that degrade accuracy of the pressure measurements. Moreover, the use of multiple pitot probes and static pressure ports, as well as the associated pneumatic connections to the remotely located pressure transducers, increases cost, weight, and complexity of installation and maintenance of the air data sensing system.

### SUMMARY

In one example, an aircraft air data system includes a first air data probe disposed on a first side of the aircraft, a second air data probe disposed on a second side of the aircraft, a first plurality of static pressure sensing ports disposed on the first side of the aircraft, and a second plurality of static pressure ports disposed on the second side of the aircraft. Each of the first air data probe and the second air data probe include a barrel portion configured to extend into an oncoming airflow about an exterior of the aircraft, a total pressure sensing port at a forward tip of the barrel portion, and an integrated total pressure sensor configured to measure the total pressure of the oncoming airflow. Each of the first plurality of static pressure sensing ports is connected to one of a first plurality of integrated static pressure sensors configured to measure static pressure of the oncoming airflow. Each of the second plurality of static pressure sensing ports is connected to one of a second plurality of integrated static pressure sensors configured to measure the static pressure of the oncoming airflow.

In another example, an aircraft air data system includes a primary air data sensing system and a standby air data sensing system. The primary air data sensing system includes first and second primary air data probes, and a plurality of primary static pressure sensing ports. Each of the first and second primary air data probes includes a barrel portion configured to extend into an oncoming airflow about an exterior of the aircraft, a total pressure sensing port at a forward tip of the barrel portion, and an integrated total pressure sensor configured to measure the total pressure of the oncoming airflow. Each of the plurality of primary static pressure sensing ports is connected to one of a plurality of primary integrated static pressure sensors configured to measure static pressure of the oncoming airflow. The standby air data sensing system includes a standby air data probe, a standby total pressure sensor, and first and second standby static pressure sensing ports. The standby air data probe includes a barrel portion configured to extend into an oncoming airflow about the exterior of the aircraft, and a total pressure sensing port at a forward tip of the barrel portion. The standby total pressure sensor is configured to measure the total pressure of the oncoming airflow.

From a first aspect, the invention provides an aircraft air data system as claimed in claim 1.

From a further aspect, which the applicant expressly reserves the right to claim, the invention provides an aircraft air data system comprising:
a primary air data sensing system comprising:
   first and second primary air data probes, each of the first and second primary air data probes comprising:
      a barrel portion configured to extend into an oncoming airflow about an exterior of the aircraft;
      a total pressure sensing port at a forward tip of the barrel portion; and
      an integrated total pressure sensor configured to measure the total pressure of the oncoming airflow; and
   a plurality of primary static pressure sensing ports, each of the plurality of primary static pressure sensing ports connected to one of a plurality of primary integrated static pressure sensors configured to measure static pressure of the oncoming airflow; and
   a standby air data sensing system comprising:
      a standby air data probe comprising:
      a barrel portion configured to extend into an oncoming airflow about the exterior of the aircraft; and
      a total pressure sensing port at a forward tip of the barrel portion;
a standby total pressure sensor configured to measure the total pressure of the oncoming airflow; and
first and second standby static pressure sensing ports.

Preferably, the standby total pressure sensor is remote from and pneumatically connected to the total pressure sensing port of the standby air data probe;
wherein the first standby static pressure sensing port is disposed on a first standby flush static pressure probe;
wherein the second standby static pressure sensing port is disposed on a second standby flush static pressure probe; and
wherein the first standby static pressure sensing port and the second standby pressure sensing port are pneumatically connected to each other and to a standby static pressure sensor that is configured to measure the static pressure of the oncoming airflow and is remote from each of the first standby flush static pressure probe and the second standby flush static pressure probe.

Still more preferably, the total pressure sensing port of the standby air data probe, the first standby static pressure sensing port, and the second standby pressure sensing port are pneumatically connected to a standby consuming system.

Preferably, in any example of the invention, the standby total pressure sensor is integrated with the standby air data probe;
wherein the first standby static pressure sensing port is disposed on a first standby flush static pressure probe that includes a first integrated standby pressure sensor configured to sense static pressure of the oncoming airflow via the first standby static pressure sensing port; and
wherein the second standby static pressure sensing port is disposed on a second standby flush static pressure probe that includes a second integrated standby pressure sensor configured to sense static pressure of the oncoming airflow via the second standby static pressure sensing port.

Preferably, in any example of the invention, the first standby static pressure sensing port is disposed on the barrel portion of the standby air data probe aft of the total pressure sensing port;
wherein the standby total pressure sensor is integrated with the standby air data probe; and
wherein the standby air data probe further comprises a first integrated standby static pressure sensor configured to sense static pressure of the oncoming airflow via the first standby static pressure sensing port.

Preferably, in any example of the invention, a first portion of the plurality of primary static pressure sensing ports are disposed on the barrel portion of the first primary air data probe;
wherein a first portion of the plurality of primary integrated static pressure sensors are integrated with the first primary air data probe;
wherein a second portion of the plurality of primary static pressure sensing ports are disposed on the barrel portion of the second primary air data probe; and
wherein a second portion of the plurality of primary integrated static pressure sensors are integrated with the second primary air data probe.

Preferably, in any example of the invention, the first primary air data probe and the first standby static pressure sensing port are disposed on a first side of the aircraft; and
wherein the second primary air data probe and the second standby static pressure sensor are disposed on a second side of the aircraft opposite the first side.

### BRIEF DESCRIPTION OF THE DRAWINGS

Preferred embodiments of the invention will now be described, by way of example only, and with reference to the accompanying drawings.
FIG. 1 is a schematic block diagram of an example aircraft air data system that includes pitot probes having integrated total pressure sensors and flush static pressure probes having integrated static pressure sensors.
FIG. 2 is a schematic block diagram of another example aircraft air data system that includes pitot probes having integrated total pressure sensors and flush static pressure probes having integrated static pressure sensors.
FIG. 3 is a schematic block diagram of another example aircraft air data system that includes air data probes having integrated total pressure sensors, flush static pressure probes having integrated static pressure sensors, and a pitot-static probe having integrated total pressure and static pressure sensors.
FIG. 4 is a schematic block diagram of another example aircraft air data system that includes pitot-dual-static probes having integrated total pressure sensors and multiple integrated static pressure sensors.
FIG. 5 is a schematic block diagram of another example aircraft air data system that includes pitot-dual-static probes having integrated total pressure sensors and multiple integrated static pressure sensors, a pitot-static probe having integrated total pressure and static pressure sensors, and a flush static pressure probe having an integrated static pressure sensor.

### DETAILED DESCRIPTION

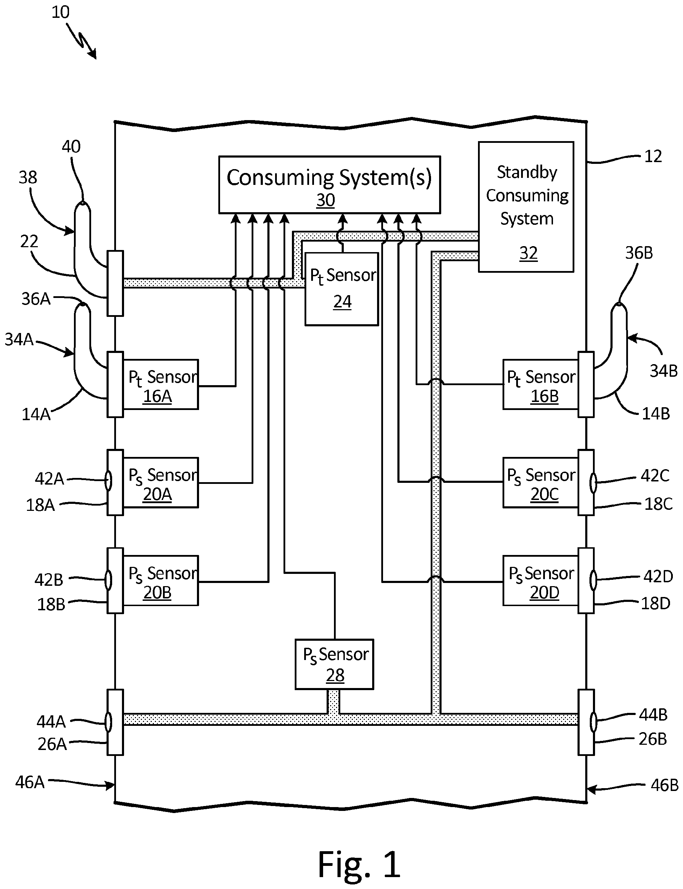

FIG. 1 is a schematic block diagram of air data system 10 integrated with aircraft 12. As illustrated in FIG. 1, air data system 10 includes primary pitot probes 14A and 14B, primary integrated total pressure sensors (Pt sensors) 16A and 16B, primary flush static pressure probes 18A, 18B, 18C, and 18D, primary integrated static pressure sensors (Ps sensors) 20A, 20B, 20C, and 20D, standby pitot probe 22, standby total pressure sensor (Pt sensor) 24, standby flush static pressure probes 26A and 26B, and standby static pressure sensor (Ps sensor) 28. Components of air data system 10 are electrically, communicatively, and/or pneumatically coupled with one or more of consuming systems 30 and standby consuming system(s) 32.

Each of primary pitot probe 14A, primary pitot probe 14B, and standby pitot probe are pitot pressure sensing probes having a barrel portion configured to extend into an oncoming airflow about an exterior of aircraft 12 and a total pressure sensing port at a forward tip of the barrel portion that is pneumatically connected to a corresponding total pressure sensor (e.g., a pressure transducer) configured to measure the total pressure of the oncoming airflow. That is, as illustrated in FIG. 1, primary pitot probe 14A includes barrel portion 34A and total pressure sensing port 36A. Primary pitot probe 14B includes barrel portion 34B and total pressure sensing port 36B. Standby pitot probe 22 includes barrel portion 38 and total pressure sensing port 40.

Total pressure sensing port 36A of primary pitot probe 14A is pneumatically connected to Pt sensor 16A. Total pressure sensing port 36B of primary pitot probe 14B is pneumatically connected to Pt sensor 16B. Pt sensors 16A and 16B are integrated pressure sensors configured to measure the total pressure of the oncoming airflow. That is, Pt sensor 16A is integrated with (e.g., enclosed within) an electronics housing of primary pitot probe 14A that extends within the interior of aircraft 12 and is pneumatically connected to total pressure sensing port 36A via an internal (to the probe) pneumatic connection. Pt sensor 16B is integrated with an electronics housing or primary pitot probe 14B that extends within the interior of aircraft 12 and is pneumatically connected to total pressure sensing port 36B via an internal pneumatic connection. In general, pressure sensed by Pt sensors 16A and 16B are integrated pressure sensors, such that pressure of the oncoming airflow is sensed by Pt sensors 16A and 16B via pneumatic connections that are internal to the probe and conversion of the sensed pressures to electrical output signals (via Pt sensors 16A and 16B) is accomplished within the electronics housing of primary pitot probes 14A and 14B, thereby removing the need for pneumatic connections between primary pitot probes 14A and 14B and remotely located electronics devices.

Primary flush static pressure probes 18A-18D and standby flush static pressure probes 26A-26B are flush static pressure probes (often referred to as static pressure ports) mounted to an exterior of aircraft 12 (e.g., substantially flush with the exterior of aircraft 12), each having a static pressure sensing port pneumatically connected to a corresponding static pressure sensor configured to measure the static pressure of an oncoming airflow about the exterior of aircraft 12. That is, primary flush static pressure probe 18A includes static pressure port 42A, primary flush static pressure probe 18B includes static pressure port 42B, primary flush static pressure probe 18C includes static pressure port 42C, and primary flush static pressure probe 18D includes static pressure port 42D. Standby flush static pressure probe 26A includes static pressure port 44A, and standby flush static pressure probe 26B includes static pressure port 44B. Static pressure port 42A is pneumatically connected to Ps sensor 20A. Static pressure port 42B is pneumatically connected to Ps sensor 20B. Static pressure port 42C is pneumatically connected to Ps sensor 20C. Static pressure port 42D is pneumatically connected to Ps sensor 20D. Each of static pressure ports 44A and 44B, as illustrated, are pneumatically connected to each other, to standby Ps sensor 28, and to standby consuming system 32 via pneumatic tubing or other direct pneumatic connection.

Ps sensors 20A-20D are integrated pressure sensors (e.g., pressure transducers) configured to measure the static pressure of the oncoming airflow about the exterior of aircraft 12. That is, Ps sensor 20A is integrated with (e.g., enclosed within) an electronics housing of primary flush static pressure probe 18A that extends within the interior of aircraft 12 and is pneumatically connected to static pressure port 42A via an internal (to the probe) pneumatic connection. Similarly, Ps sensor 20B is integrated with primary flush static pressure probe 18A, Ps sensor 20C is integrated with primary flush static pressure probe 18C, and Ps sensor 20D is integrated with primary flush static pressure probe 18D, each pneumatically connected to a corresponding one of static ports 42B-42D via internal pneumatic connections.

Standby Pt sensor 24 and standby Ps sensor 28 are each pressure transducers or other types of pressure sensors that are physically remote from and pneumatically connected to a corresponding one or more of standby pitot probe 22 and standby flush static pressure probes 26A and 26B. That is, standby Pt sensor 24 is located within aircraft 12 remote from standby pitot probe 22 (e.g., within an electronics bay or otherwise physically remote from the installed location of standby pitot probe 22). Standby Pt sensor 24 is pneumatically connected to standby pitot probe 22 via pneumatic tubing or other pneumatic connection to receive and measure total pressure of the oncoming airflow about the exterior of aircraft 12 communicated via total pressure sensing port 40.

Standby Ps sensor 28 is located within aircraft 12 remote from standby flush static pressure probes 26A and 26B (e.g., physically remote from the installed location of each of standby static pressure probes 26A and 26B). Standby Ps sensor 28 is pneumatically connected to each of standby flush static pressure probe 26A and 26B via pneumatic tubing or other pneumatic connection to receive and measure static pressure of the oncoming airflow about the exterior of aircraft 12 communicated via static pressure sensing ports 44A and 44B. Static pressure communicated to standby Ps sensor 28 and to standby consuming system 32 is a pneumatically averaged pressure via the direct pneumatic connection between each of static pressure port 44A, static pressure port 44B, standby Ps sensor 28, and standby consuming system 32.

As illustrated in FIG. 1, Pt sensors 16A and 16B, Ps sensors 20A-20D, standby Pt sensor 24, and standby Ps sensor 28 are each electrically and/or communicatively coupled with consuming systems 30 to transmit indications of the corresponding measured pressures to the one or more consuming systems 30. Consuming systems 30 can include any one or more of, e.g., air data computers (ADCs), air data inertial reference units (ADIRUs), cabin pressurization controllers, an electronic flight instrument system (EFIS), or other aircraft systems that utilize the measured pressure information for air data parameter derivations, display, and/or operational control of aircraft 12. Electrical and/or communicative connections can take the form of direct electrical couplings and/or data bus couplings configured to communicate according to one or more communication protocols, such as the Aeronautical Radio, Incorporated (ARINC) 429 communication protocol, controller area network (CAN) bus communication protocol, military standard 1553 (MIL-STD-1553) communication protocol, or other analog or digital communication protocols.

Standby pitot probe 22 and each of standby flush static pressure probes 26A and 26B are pneumatically connected via pneumatic tubing or other pneumatic connection to standby consuming system 32. Standby consuming system 32 includes one or more cockpit indicators configured to display aircraft air data information, such as altitude, airspeed, attitude, or other air data information for use as backup instrumentation in the event of a failure mode of primary flight instrumentation. Total pressure of the oncoming airflow is communicated to standby consuming system 32 via the pneumatic connection with total pressure sensing port 40 of standby pitot probe 22. Static pressure of the oncoming airflow is communicated to standby consuming system 32 via the pneumatic connection with static pressure ports 44A and 44B, and is pneumatically averaged via the direct pneumatic connection between static pressure ports 44A and 44B to provide pneumatic sideslip compensation of the static pressure.

As illustrated in FIG. 1, aircraft 12 includes first side 46A and second side 46B, opposite first side 46A. Primary pitot probe 14A, primary flush static pressure probes 16A and 16B, standby pitot probe 22, and standby flush static pressure probe 26A are disposed at first side 46A of aircraft 12. Primary pitot probe 14B, primary flush static pressure probes 16C and 16D, and standby flush static pressure probe 26B are disposed at second side 46B of aircraft 12. Accordingly, primary pitot probes 14A and 14B in combination with primary static pressure probes 18A-18D forms a primary air data sensing system that provides total pressure information to consuming systems 30 that is measured at opposite sides of aircraft 12 via primary pitot probe 14A and 14B as well as redundant sets of static pressure information measured at opposite sides of aircraft 12 via primary flush static pressure probes 18A-18D. Such opposite side total pressure and static pressure information enables consuming systems 30 to characterize the pressure measurements based on the cross-side pressure information for sideslip compensation of the measured pressures and air data parameters derived therefrom.

Standby pitot probe 22 in combination with standby flush static pressure probes 26A and 26B forms a standby air data sensing system that provides total pressure information measured at first side 46A as well as static pressure information that is pneumatically averaged between opposite sides of aircraft 12 for pneumatic sideslip compensation. While standby pitot probe 22 is illustrated as disposed at first side 46A in the example of FIG. 1, it should be understood that standby pitot probe 22 can be disposed at second side 46B in other examples. In addition, while standby Pt sensor 24 and standby Ps sensor 28 are illustrated and described herein as electrically and/or communicatively connected with consuming systems 30 (e.g., for comparison and/or failure mode identification operations), it should be understood that in other examples, standby Pt sensor 24 and standby Ps sensor 28 may not be connected (e.g., pneumatically, electrically, communicatively, or otherwise connected) to consuming systems 30. Similarly, though not illustrated in the example of FIG. 1, any one or more of the primary and standby air data sensing systems can include additional sensors, such as total air temperature (TAT) probes, angle of attack (AOA) sensors (e.g., vanes), or other sensors usable by consuming systems 30 and/or standby consuming system 32 for generation of air data parameters and operational control of aircraft 12.

Accordingly, air data system 10 implementing techniques of this disclosure provides triply-redundant independent total pressure measurements via primary pitot probes 14A, 14B and standby pitot probe 22, and triply-redundant sideslip-correctable static pressure measurements via primary flush static pressure probes 18A-18D and standby flush static pressure probes 26A and 26B. Integration of Pt sensors 16A and 16B to primary pitot probes 14A and 14B, respectively, as well as integration of primary static pressure sensors 20A-20D to primary flush static pressure probes 18A-18D, respectively, eliminates the need for pneumatic tubing between the pitot probes and flush static pressure probes and the corresponding pressure sensors, thereby decreasing the cost, weight, and maintenance burden associated with such pneumatic connections.

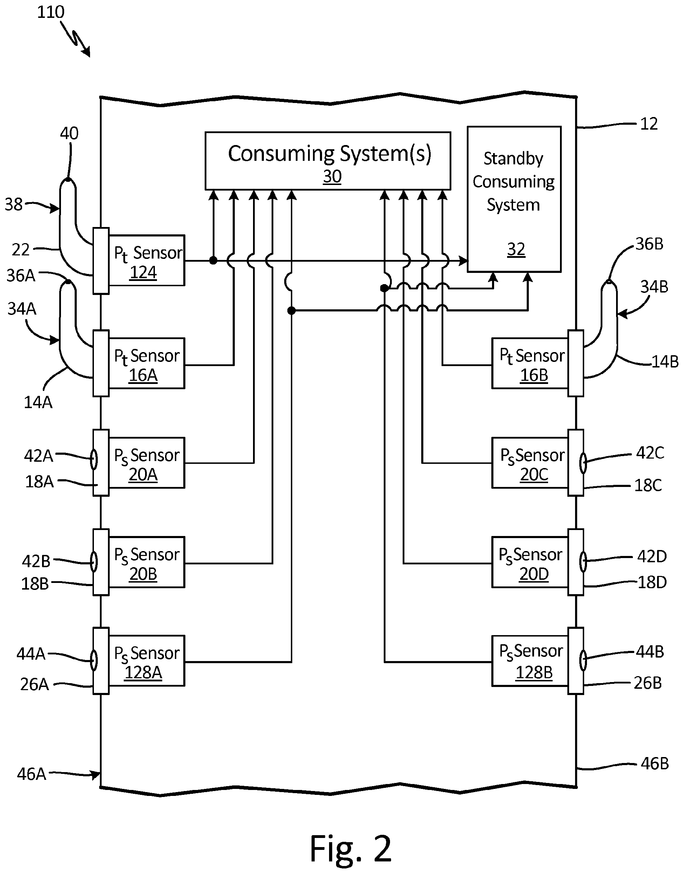

FIG. 2 is a schematic block diagram of air data system 110 integrated with aircraft 12. Air data system 110 is similar to air data system 10 of FIG. 1, and like reference numbers are utilized to indicate like components.

In the example of FIG. 2, rather than include standby Pt sensor 24 (FIG. 1) that is remote from and pneumatically coupled with standby pitot probe 22 via pneumatic tubing or other pneumatic connection, air data system 110 includes integrated standby total pressure sensor (Pt sensor) 124 that is integrated with standby pitot probe 22 and pneumatically connected with total pressure sensing port 40 via an internal (to the probe) pneumatic connection to measure a total pressure of oncoming airflow about an exterior of aircraft 12. That is, Pt sensor 124 is a pressure transducer or other pressure sensor that is integrated with (e.g., enclosed within) an electronics housing of standby pitot probe 22 that extends within an interior of aircraft 12 and is pneumatically connected with total pressure sensing port 40. Pt sensor 124 is electrically and/or communicatively connected with standby consuming system 32 (and, in some examples, consuming systems 30) to output an indication of the measured total pressure.

In addition, as illustrated in FIG. 2, rather than include Ps sensor 28 (FIG. 1) that is remote from and pneumatically coupled with each of standby flush static pressure probes 26A and 26B, air data system 110 includes integrated standby pressure sensor (Ps sensor) 128A that is integrated with standby flush static pressure probe 26A and integrated standby pressure sensor (Ps sensor) 128B that is integrated with standby flush static pressure probe 26B. Ps sensor 128A is a pressure transducer or other pressure sensor that is integrated with (e.g., enclosed within) an electronics housing of standby flush static pressure probe 26A that extends within an interior of aircraft 12 and is pneumatically connected with static pressure port 44A. Similarly, Ps sensor 128B is a pressure transducer or other pressure sensor that is integrated with (e.g., enclosed within) an electronics housing of standby flush static pressure probe 26B that extends within an interior of aircraft 12 and is pneumatically connected with static pressure port 44B. Each of Ps sensor 128A and Ps sensor 128B is electrically and/or communicatively coupled with standby consuming system 32 (and, in some examples, consuming systems 30) to output an indication of the measured static pressure.

Accordingly, air data system 110 provides triply-redundant independent total pressure measurements via primary pitot probes 14A, 14B, and standby pitot probe 22, and triply-redundant sideslip-correctable static pressure measurements via primary flush static pressure probes 18A-18D and standby flush static pressure probes 26A and 26B. Integration of Pt sensor 124 with standby pitot probe 22, Ps sensor 128A with standby flush static pressure probe 26A, and Ps sensor 128B with standby flush static pressure probe 26B further eliminates the need for pneumatic tubing between the probes and the corresponding pressure sensors, thereby further reducing the cost, weight, and maintenance burden associated with such pneumatic connections.

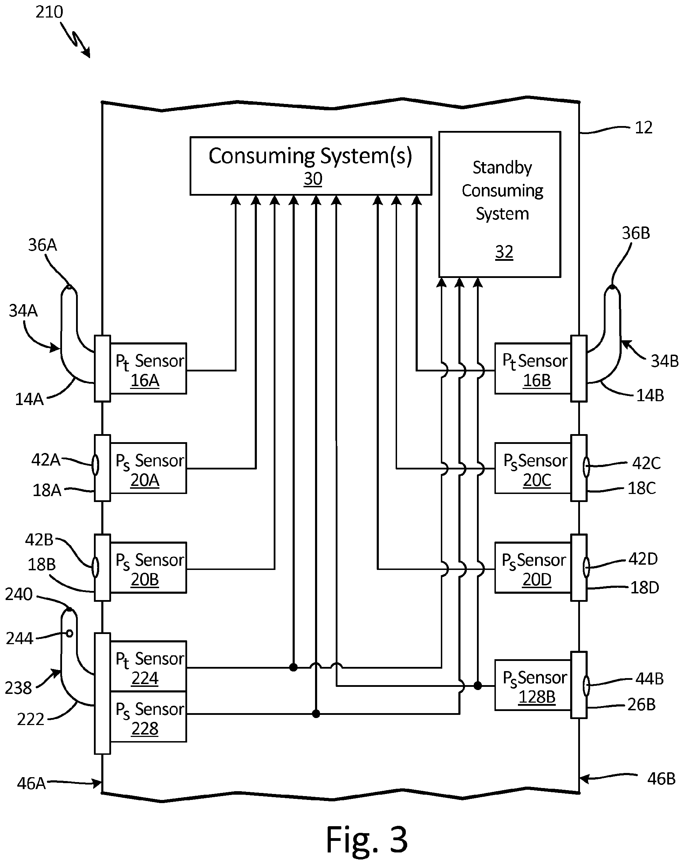

FIG. 3 is a schematic block diagram of air data system 210 integrated with aircraft 12. Air data system 210 is similar to the air data systems described above with respect to FIGS. 1 and 2, and like reference numbers are utilized to indicate like components.

In the example of FIG. 3, rather than include standby pitot probe 22 (FIGS. 1 and 2) and standby flush static pressure probe 26A (FIGS. 1 and 2), air data system 210 includes standby pitot-static probe 222. As illustrated in FIG. 3, standby pitot-static probe 222 is a pitot-static probe having barrel portion 238 configured to extend into an oncoming airflow about an exterior of aircraft 12, total pressure sensing port 240 at a forward tip of barrel portion 238, and static pressure sensing port 244 disposed in barrel portion 238 aft of total pressure sensing port 240. Total pressure sensing port 240 is pneumatically connected to integrated standby total pressure sensor (Pt sensor) 224. Static pressure sensing port 244 is pneumatically connected to integrated standby static pressure sensor (Ps sensor) 228. Pt sensor 224 and Ps sensor 228 are integrated pressure transducers or other types of pressure sensors configured to measure a total pressure (Pt sensor 224) and static pressure (Ps sensor 228) of the oncoming airflow about the exterior of aircraft 12. Each of Pt sensor 224 and Ps sensor 228 is electrically and/or communicatively coupled with standby consuming system 32 (and, in some examples, consuming systems 30) to output an indication of the measured total pressure (Pt sensor 224) and static pressure (Ps sensor 228).

Accordingly, air data system 210 provides triply-redundant independent total pressure measurements and triply-redundant sideslip-correctable static pressure measurements that are usable by consuming systems 30 and/or standby consuming system 32 for operational control of aircraft 12. Moreover, the use of standby pitot-static probe 222 rather than standby pitot probe 22 and standby flush static pressure probe 26A decreases the total number of air data probes required to provide the triply-redundant pressure measurements. Such reduction in the number of probes reduces the cost, weight, and integration and maintenance efforts associated with the air data system.

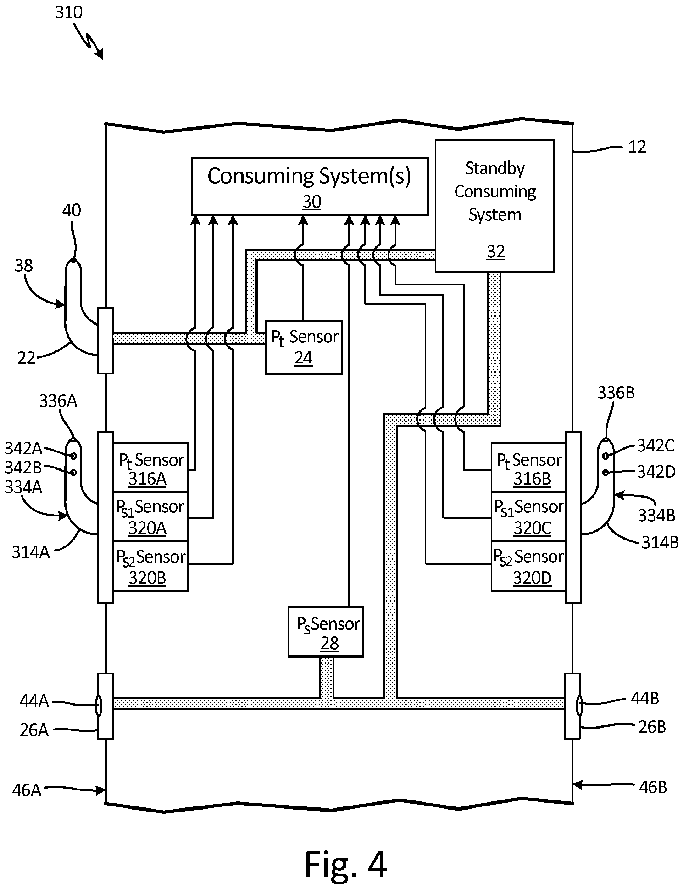

FIG. 4 is a schematic block diagram of air data system 310 integrated with aircraft 12. Air data system 310 is similar to the air data systems described above with respect to FIGS. 1-3, and like reference numbers are utilized to indicate like components.

In the example of FIG. 4, rather than include primary pitot probes 14A and 14B (FIGS. 1-3) and primary flush static pressure probes 18A-18D (FIGS. 1-3), air data system 310 includes primary pitot-dual-static probe 314A and primary pitot-dual-static probe 314B. As illustrated in FIG. 4, each of primary pitot-dual-static probes 314A and 314B includes a barrel portion configured to extend into an oncoming airflow about an exterior of aircraft 12, a total pressure sensing port disposed at a forward tip of the barrel portion, and a plurality of static pressure sensing ports disposed in the barrel portion aft of the total pressure sensing port. That is, primary pitot-dual-static probe 314A includes barrel portion 334A, total pressure sensing port 336A disposed at a forward tip of barrel portion 334A, static pressure sensing port 342A disposed on barrel portion 334A aft of total pressure sensing port 336A, and static pressure sensing port 342B disposed on barrel portion 334A aft of static pressure sensing port 342A. Total pressure sensing port 336A is pneumatically connected to integrated total pressure sensor (Pt sensor) 316A via internal pneumatic connection. Static pressure sensing port 342A is pneumatically connected to primary integrated static pressure sensor (Ps1 sensor) 320A via internal pneumatic connection. Static pressure sensing port 342B is pneumatically connected to primary integrated static pressure sensor (Ps2 sensor) 320B via internal pneumatic connection.

In some examples, primary pitot-dual-static probe 314A can include additional static pressure sensing ports that are complementary to static pressure sensing ports 324A and 342B. For instance, in certain examples, primary pitot-dual-static probe 314A can include an additional static pressure sensing port disposed at a bottom side of primary pitot-dual-static probe 314A opposite static pressure sensing port 342A (i.e., disposed at the top side of primary pitot-dual-static probe). Static pressure sensing port 342A and the complementary static pressure sensing port disposed opposite static pressure sensing port 342A can be pneumatically connected to each other (e.g., via an internal pneumatic chamber or other pneumatic connection) and to Ps1 sensor 320A. Accordingly, static pressure communicated to Ps1 sensor 320A can be a pneumatically averaged static pressure between static pressure sensing port 342A and the complementary static pressure port disposed opposite static pressure sensing port 342A. Similarly, primary pitot-dual-static probe 314A can include a complementary static pressure sensing port disposed in the bottom side of primary pitot-dual-static probe 314A opposite static pressure sensing port 342B, such that the static pressure sensing port 342B and the complementary static pressure sensing port disposed opposite static pressure sensing port 342B are pneumatically connected to each other and to Ps2 sensor 320B.

As illustrated in FIG. 4, primary pitot-dual-static probe 314B includes barrel portion 334B, total pressure sensing port 336B disposed at a forward tip of barrel portion 334B, static pressure sensing port 342C disposed on barrel portion 334B aft of total pressure sensing port 336B, and static pressure sensing port 342D disposed on barrel portion 334B aft of static pressure sensing port 342C. Total pressure sensing port 336B is pneumatically connected to integrated total pressure sensor (Pt sensor) 316B via internal pneumatic connection. Static pressure sensing port 342C is pneumatically connected to primary integrated static pressure sensor (Ps1 sensor) 320C via internal pneumatic connection. Static pressure sensing port 342D is pneumatically connected to primary integrated static pressure sensor (Ps2 sensor) 320D via internal pneumatic connection. As described above with respect to primary pitot-dual-static probe 314A, primary pitot-dual-static probe 314B can include additional static pressure sensing ports that are complementary to and pneumatically coupled with static pressure sensing ports 320C and 320D.

Pt sensor 316A, Ps1 sensor 320A, Ps2 sensor 320B, Pt sensor 316B, Ps1 sensor 320C, and Ps2 sensor 320D are each electrically and/or communicatively connected to consuming systems 30 to output indications of the corresponding measured pressures. Accordingly, air data system 310 provides triply-redundant independent total pressure measurements and triply-redundant sideslip-correctable static pressure measurements that are usable by consuming systems 30 and/or standby consuming system 32 for operational control of aircraft 12. The use of primary pitot-dual-static probes 314A and 314B, rather than two primary pitot probes and four primary flush static pressure probes, decreases the total number of air data probes required to provide the triply-redundant pressure measurements. Accordingly, air data system 310, utilizing primary pitot-dual-static probes 314A and 314B, can reduce the cost, weight, and integration and maintenance efforts associated with operational use of the air data system.

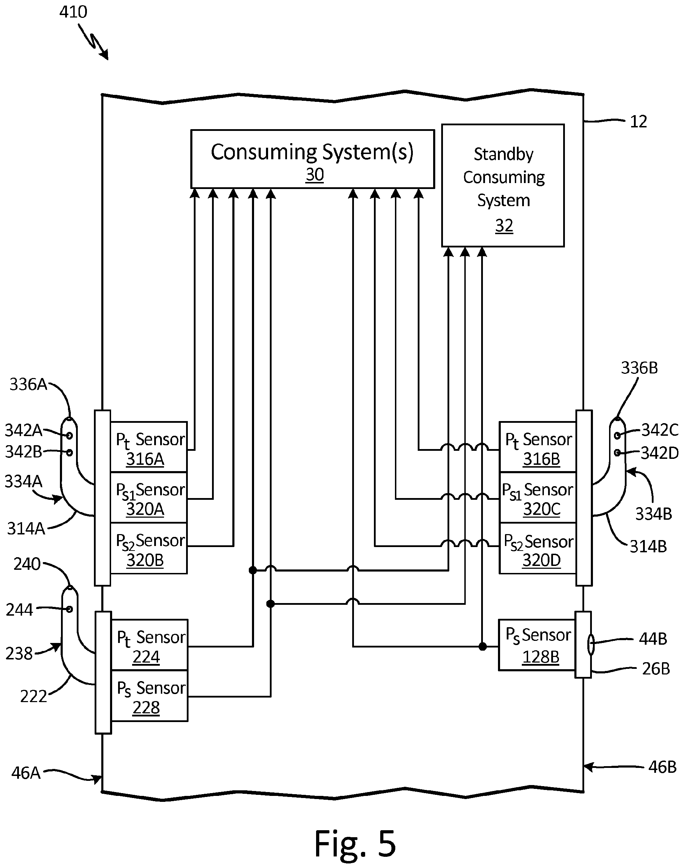

FIG. 5 is a schematic block diagram of air data system 410 integrated with aircraft 12. Air data system 410 is similar to the air data systems described above with respect to FIGS. 1-4, and like reference numbers are utilized to indicate like components.

As illustrated in the example of FIG. 5, air data system 410 includes primary pitot-dual-static probes 314A and 314B, standby pitot-static probe 222, and standby flush static pressure probe 26B. Primary pitot-dual-static probes 334A and 334B, in combination, form a primary air data sensing system that provides redundant and independent total pressure measurements (via Pt sensors 316A and 316B) and static pressure measurements (via Ps1 sensors 320A and 320C as well as Ps2 sensors 320B and 320D) to consuming systems 30. Standby pitot-static probe 222 and standby flush static pressure probe 26B, in combination, form a standby air data sensing system that provides independent total pressure measurement (via Pt sensor 224) and static pressure measurements (via Ps sensors 228 and 128B) to standby consuming system 32 (and, in some examples, consuming systems 30). Accordingly, air data system 410 provides triply-redundant independent total pressure measurements and triply-redundant sideslip-correctable static pressure measurements via four total air data probes (i.e., primary pitot-dual-static probes 314A and 314B as well as standby pitot-static probe 222 and standby flush static pressure probe 26B), thereby reducing the cost, weight, and integration and maintenance efforts associated with operational use of the air data system.

### DISCUSSION OF POSSIBLE EMBODIMENTS

An aircraft air data system includes a first air data probe disposed on a first side of the aircraft, a second air data probe disposed on a second side of the aircraft, a first plurality of static pressure sensing ports disposed on the first side of the aircraft, and a second plurality of static pressure ports disposed on the second side of the aircraft. Each of the first air data probe and the second air data probe include a barrel portion configured to extend into an oncoming airflow about an exterior of the aircraft, a total pressure sensing port at a forward tip of the barrel portion, and an integrated total pressure sensor configured to measure the total pressure of the oncoming airflow. Each of the first plurality of static pressure sensing ports is connected to one of a first plurality of integrated static pressure sensors configured to measure static pressure of the oncoming airflow. Each of the second plurality of static pressure sensing ports is connected to one of a second plurality of integrated static pressure sensors configured to measure the static pressure of the oncoming airflow.

The aircraft air data system of the preceding paragraph can optionally include, additionally and/or alternatively, any one or more of the following features, configurations, operations, and/or additional components:
The aircraft air data system can further include a standby air data probe disposed on the first side of the aircraft, a first standby static pressure sensing port disposed on the first side of the aircraft, and a second standby static pressure sensing port disposed on the second side of the aircraft. The standby air data probe can include a barrel portion configured to extend into the oncoming airflow about the exterior of the aircraft, a total pressure sensing port at a forward tip of the barrel portion, and a standby total pressure sensor configured to measure the total pressure of the oncoming airflow.

The standby total pressure sensor can be remote from and pneumatically connected to the total pressure sensing port of the standby air data probe. The first standby static pressure sensing port can be disposed on a first standby flush static pressure probe. The second standby static pressure sensing port can be disposed on a second standby flush static pressure probe. The first standby static pressure sensing port and the second standby pressure sensing port can be pneumatically connected to each other and to a standby static pressure sensor that is configured to measure the static pressure of the oncoming airflow and is remote from each of the first standby flush static pressure probe and the second standby flush static pressure probe.

The total pressure sensing port of the standby air data probe, the first standby static pressure sensing port, and the second standby pressure sensing port can be pneumatically connected to a standby consuming system.

The standby total pressure sensor can be integrated with the standby air data probe. The first standby static pressure sensing port can be disposed on a first standby flush static pressure probe that includes a first integrated standby pressure sensor configured to sense static pressure of the oncoming airflow via the first standby static pressure sensing port. The second standby static pressure sensing port can be disposed on a second standby flush static pressure probe that includes a second integrated standby pressure sensor configured to sense static pressure of the oncoming airflow via the second standby static pressure sensing port.

The first standby static pressure sensing port can be disposed on the barrel portion of the standby air data probe aft of the total pressure sensing port. The standby total pressure sensor can be integrated with the standby air data probe. The standby air data probe can further include a first integrated standby static pressure sensor configured to sense static pressure of the oncoming airflow via the first standby static pressure sensing port.

The first plurality of static pressure sensing ports can be disposed on the barrel portion of the first air data probe. The first plurality of integrated static pressure sensors can be integrated with the first air data probe. The second plurality of static pressure sensing ports can be disposed on the barrel portion of the second air data probe. The second plurality of static pressure sensors can be integrated with the second air data probe.

The first plurality of static pressure sensing ports can include a first set of two complementary static pressure sensing ports and a second set of two complementary static pressure sensing ports. The first plurality of integrated static pressure sensors can include a first integrated static pressure sensor and a second integrated static pressure sensor. The first set of two complementary static pressure sensing ports can be pneumatically connected with each other and with the first integrated static pressure sensor. The second set of two complementary static pressure sensing ports can be pneumatically connected with each other and with the second integrated static pressure sensor. The second plurality of static pressure sensing ports can include a third set of two complementary static pressure sensing ports and a fourth set of two complementary static pressure sensing ports. The second plurality of integrated static pressure sensors can include a third integrated static pressure sensor and a fourth integrated static pressure sensor. The third set of two complementary static pressure sensing ports can be pneumatically connected with each other and with the third integrated static pressure sensor. The fourth set of two complementary static pressure sensing ports can be pneumatically connected with each other and with the fourth integrated static pressure sensor.

A first port of the first set of two complementary static pressure sensing ports can be disposed on a top side of the barrel portion of the first air data probe. A second port of the first set of two complementary static pressure sensing ports can be disposed on a bottom side of the barrel portion of the first air data probe opposite the first port of the first set of two complementary static pressure sensing ports. A first port of the second set of two complementary static pressure sensing ports can be disposed on the top side of the barrel portion of the first air data probe aft of the first port of the first set of two complementary static pressure sensing ports. A second port of the second set of two complementary static pressure sensing ports can be disposed on the bottom side of the barrel portion of the first air data probe opposite the first port of the second set of two complementary static pressure sensing ports. A first port of the third set of two complementary static pressure sensing ports can be disposed on a top side of the barrel portion of the second air data probe. A second port of the third set of two complementary static pressure sensing ports can be disposed on a bottom side of the barrel portion of the second air data probe opposite the first port of the third set of two complementary static pressure sensing ports. A first port of the fourth set of two complementary static pressure sensing ports can be disposed on the top side of the barrel portion of the second air data probe aft of the first port of the third set of two complementary static pressure sensing ports. A second port of the fourth set of two complementary static pressure sensing ports can be disposed on the bottom side of the barrel portion of the second air data probe opposite the first port of the third set of two complementary static pressure sensing ports.

The aircraft air data system can further includes a standby air data probe disposed on the first side of the aircraft and a second standby static pressure sensing port disposed on the second side of the aircraft. The standby air data probe can include: a barrel portion configured to extend into the oncoming airflow about the exterior of the aircraft; a total pressure sensing port at a forward tip of the barrel portion; a static pressure sensing port disposed on the barrel portion aft of the total pressure sensing port; an integrated standby total pressure sensor pneumatically connected to the total pressure sensing port and configured to measure the total pressure of the oncoming airflow; and an integrated standby static pressure sensor pneumatically connected to the static pressure sensing port and configured to measure the static pressure of the oncoming airflow.

Each of the first plurality of static pressure sensing ports can be disposed on one of a first plurality of flush static pressure probes. Each of the first plurality of flush static pressure probes can include one of the first plurality of integrated static pressure sensors. Each of the second plurality of static pressure sensing ports can be disposed on one of a second plurality of flush static pressure probes. Each of the second plurality of flush static pressure probes can include one of the second plurality of integrated static pressure sensors.

The first plurality of flush static pressure probes can include a first flush static pressure probe disposed at a first location on the first side of the aircraft and a second flush static pressure probe disposed at a second location of the first side of the aircraft aft of the first location. The second plurality of flush static pressure probes can include a third flush static pressure probe disposed at a third location on the second side of the aircraft and a fourth flush static pressure probe disposed at a fourth location of the second side of the aircraft aft of the third location.

The integrated total pressure sensor of the first air data probe and the integrated total pressure sensor of the second air data probe can each be configured to output an indication of the measured total pressure of the oncoming airflow. Each of the first plurality of integrated static pressure sensors and each of the second plurality of integrated static pressure sensors can be configured to output an indication of the measured static pressure of the oncoming airflow.

An aircraft air data system includes a primary air data sensing system and a standby air data sensing system. The primary air data sensing system includes first and second primary air data probes, and a plurality of primary static pressure sensing ports. Each of the first and second primary air data probes includes a barrel portion configured to extend into an oncoming airflow about an exterior of the aircraft, a total pressure sensing port at a forward tip of the barrel portion, and an integrated total pressure sensor configured to measure the total pressure of the oncoming airflow. Each of the plurality of primary static pressure sensing ports is connected to one of a plurality of primary integrated static pressure sensors configured to measure static pressure of the oncoming airflow. The standby air data sensing system includes a standby air data probe, a standby total pressure sensor, and first and second standby static pressure sensing ports. The standby air data probe includes a barrel portion configured to extend into an oncoming airflow about the exterior of the aircraft, and a total pressure sensing port at a forward tip of the barrel portion. The standby total pressure sensor is configured to measure the total pressure of the oncoming airflow.

The aircraft air data system of the preceding paragraph can optionally include, additionally and/or alternatively, any one or more of the following features, configurations, operations, and/or additional components:
The standby total pressure sensor can be remote from and pneumatically connected to the total pressure sensing port of the standby air data probe. The first standby static pressure sensing port can be disposed on a first standby flush static pressure probe. The second standby static pressure sensing port can be disposed on a second standby flush static pressure probe. The first standby static pressure sensing port and the second standby pressure sensing port can be pneumatically connected to each other and to a standby static pressure sensor that is configured to measure the static pressure of the oncoming airflow and is remote from each of the first standby flush static pressure probe and the second standby flush static pressure probe.

The total pressure sensing port of the standby air data probe, the first standby static pressure sensing port, and the second standby pressure sensing port can be pneumatically connected to a standby consuming system.

The standby total pressure sensor can be integrated with the standby air data probe. The first standby static pressure sensing port can be disposed on a first standby flush static pressure probe that includes a first integrated standby pressure sensor configured to sense static pressure of the oncoming airflow via the first standby static pressure sensing port. The second standby static pressure sensing port can be disposed on a second standby flush static pressure probe that includes a second integrated standby pressure sensor configured to sense static pressure of the oncoming airflow via the second standby static pressure sensing port.

The first standby static pressure sensing port can be disposed on the barrel portion of the standby air data probe aft of the total pressure sensing port. The standby total pressure sensor can be integrated with the standby air data probe. The standby air data probe can further include a first integrated standby static pressure sensor configured to sense static pressure of the oncoming airflow via the first standby static pressure sensing port.

A first portion of the plurality of primary static pressure sensing ports can be disposed on the barrel portion of the first primary air data probe. A first portion of the plurality of primary integrated static pressure sensors can be integrated with the first primary air data probe. A second portion of the plurality of primary static pressure sensing ports can be disposed on the barrel portion of the second primary air data probe. A second portion of the plurality of primary integrated static pressure sensors can be integrated with the second primary air data probe.

The first primary air data probe and the first standby static pressure sensing port can be disposed on a first side of the aircraft. The second primary air data probe and the second standby static pressure sensor can be disposed on a second side of the aircraft opposite the first side.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An aircraft air data system comprising:
a first air data probe disposed on a first side of the aircraft and a second air data probe disposed on a second side of the aircraft opposite the first side, each of the first air data probe and the second air data probe comprising:
a barrel portion configured to extend into an oncoming airflow about an exterior of the aircraft;
a total pressure sensing port at a forward tip of the barrel portion; and
an integrated total pressure sensor configured to measure the total pressure of the oncoming airflow;
a first plurality of static pressure sensing ports disposed on the first side of the aircraft, each of the first plurality of static pressure sensing ports connected to one of a first plurality of integrated static pressure sensors configured to measure static pressure of the oncoming airflow; and
a second plurality of static pressure sensing ports disposed on the second side of the aircraft, each of the second plurality of static pressure sensing ports connected to one of a second plurality of integrated static pressure sensors configured to measure the static pressure of the oncoming airflow.

2. The aircraft air data system of claim 1, further comprising:
a standby air data probe disposed on the first side of the aircraft, the standby air data probe comprising:
a barrel portion configured to extend into the oncoming airflow about the exterior of the aircraft;
a total pressure sensing port at a forward tip of the barrel portion; and
a standby total pressure sensor configured to measure the total pressure of the oncoming airflow;
a first standby static pressure sensing port disposed on the first side of the aircraft; and
a second standby static pressure sensing port disposed on the second side of the aircraft.

3. The aircraft air data system of claim 2,
wherein the standby total pressure sensor is remote from and pneumatically connected to the total pressure sensing port of the standby air data probe;
wherein the first standby static pressure sensing port is disposed on a first standby flush static pressure probe;
wherein the second standby static pressure sensing port is disposed on a second standby flush static pressure probe; and
wherein the first standby static pressure sensing port and the second standby pressure sensing port are pneumatically connected to each other and to a standby static pressure sensor that is configured to measure the static pressure of the oncoming airflow and is remote from each of the first standby flush static pressure probe and the second standby flush static pressure probe.

4. The aircraft air data system of claim 3,
wherein the total pressure sensing port of the standby air data probe, the first standby static pressure sensing port, and the second standby pressure sensing port are pneumatically connected to a standby consuming system.

5. The aircraft air data system of claim 2,
wherein the standby total pressure sensor is integrated with the standby air data probe;
wherein the first standby static pressure sensing port is disposed on a first standby flush static pressure probe that includes a first integrated standby pressure sensor configured to sense static pressure of the oncoming airflow via the first standby static pressure sensing port; and
wherein the second standby static pressure sensing port is disposed on a second standby flush static pressure probe that includes a second integrated standby pressure sensor configured to sense static pressure of the oncoming airflow via the second standby static pressure sensing port.

6. The aircraft air data system of claim 2,
wherein the first standby static pressure sensing port is disposed on the barrel portion of the standby air data probe aft of the total pressure sensing port;
wherein the standby total pressure sensor is integrated with the standby air data probe; and
wherein the standby air data probe further comprises a first integrated standby static pressure sensor configured to sense static pressure of the oncoming airflow via the first standby static pressure sensing port;

7. The aircraft air data system of any preceding claim,
wherein the first plurality of static pressure sensing ports are disposed on the barrel portion of the first air data probe;
wherein the first plurality of integrated static pressure sensors are integrated with the first air data probe;
wherein the second plurality of static pressure sensing ports are disposed on the barrel portion of the second air data probe; and
wherein the second plurality of static pressure sensors are integrated with the second air data probe.

8. The aircraft air data system of claim 7,
wherein the first plurality of static pressure sensing ports comprises a first set of two complementary static pressure sensing ports and a second set of two complementary static pressure sensing ports;
wherein the first plurality of integrated static pressure sensors comprises a first integrated static pressure sensor and a second integrated static pressure sensor;
wherein the first set of two complementary static pressure sensing ports are pneumatically connected with each other and with the first integrated static pressure sensor;
wherein the second set of two complementary static pressure sensing ports are pneumatically connected with each other and with the second integrated static pressure sensor;
wherein the second plurality of static pressure sensing ports comprises a third set of two complementary static pressure sensing ports and a fourth set of two complementary static pressure sensing ports;
wherein the second plurality of integrated static pressure sensors comprises a third integrated static pressure sensor and a fourth integrated static pressure sensor;
wherein the third set of two complementary static pressure sensing ports are pneumatically connected with each other and with the third integrated static pressure sensor; and
wherein the fourth set of two complementary static pressure sensing ports are pneumatically connected with each other and with the fourth integrated static pressure sensor.

9. The aircraft air data system of claim 8,
wherein a first port of the first set of two complementary static pressure sensing ports is disposed on a top side of the barrel portion of the first air data probe;
wherein a second port of the first set of two complementary static pressure sensing ports is disposed on a bottom side of the barrel portion of the first air data probe opposite the first port of the first set of two complementary static pressure sensing ports;
wherein a first port of the second set of two complementary static pressure sensing ports is disposed on the top side of the barrel portion of the first air data probe aft of the first port of the first set of two complementary static pressure sensing ports;
wherein a second port of the second set of two complementary static pressure sensing ports is disposed on the bottom side of the barrel portion of the first air data probe opposite the first port of the second set of two complementary static pressure sensing ports;
wherein a first port of the third set of two complementary static pressure sensing ports is disposed on a top side of the barrel portion of the second air data probe;
wherein a second port of the third set of two complementary static pressure sensing ports is disposed on a bottom side of the barrel portion of the second air data probe opposite the first port of the third set of two complementary static pressure sensing ports;
wherein a first port of the fourth set of two complementary static pressure sensing ports is disposed on the top side of the barrel portion of the second air data probe aft of the first port of the third set of two complementary static pressure sensing ports; and
wherein a second port of the fourth set of two complementary static pressure sensing ports is disposed on the bottom side of the barrel portion of the second air data probe opposite the first port of the third set of two complementary static pressure sensing ports.

10. The aircraft air data system of claim 7, further comprising:
a standby air data probe disposed on the first side of the aircraft, the standby air data probe comprising:
a barrel portion configured to extend into the oncoming airflow about the exterior of the aircraft;
a total pressure sensing port at a forward tip of the barrel portion;
a static pressure sensing port disposed on the barrel portion aft of the total pressure sensing port;
an integrated standby total pressure sensor pneumatically connected to the total pressure sensing port and configured to measure the total pressure of the oncoming airflow; and
an integrated standby static pressure sensor pneumatically connected to the static pressure sensing port and configured to measure the static pressure of the oncoming airflow; and
a second standby static pressure sensing port disposed on the second side of the aircraft.

11. The aircraft air data system of any preceding claim,
wherein each of the first plurality of static pressure sensing ports is disposed on one of a first plurality of flush static pressure probes, each of the first plurality of flush static pressure probes including one of the first plurality of integrated static pressure sensors; and
wherein each of the second plurality of static pressure sensing ports is disposed on one of a second plurality of flush static pressure probes, each of the second plurality of flush static pressure probes including one of the second plurality of integrated static pressure sensors.

12. The aircraft air data system of claim 11,
wherein the first plurality of flush static pressure probes includes a first flush static pressure probe disposed at a first location on the first side of the aircraft and a second flush static pressure probe disposed at a second location of the first side of the aircraft aft of the first location; and
wherein the second plurality of flush static pressure probes includes a third flush static pressure probe disposed at a third location on the second side of the aircraft and a fourth flush static pressure probe disposed at a fourth location of the second side of the aircraft aft of the third location.

13. The aircraft air data system of any preceding claim,
wherein the integrated total pressure sensor of the first air data probe and the integrated total pressure sensor of the second air data probe are each configured to output an indication of the measured total pressure of the oncoming airflow; and
wherein each of the first plurality of integrated static pressure sensors and each of the second plurality of integrated static pressure sensors are configured to output an indication of the measured static pressure of the oncoming airflow.
